# EUROPEAN PATENT SPECIFICATION

(11) **EP 3 833 833 B1**
(45) Date of publication and mention of the grant of the patent: **19.04.2023**
(21) Application number: 19769899.6
(22) Date of filing: 08.08.2019
(51) Int. Cl.: E04G 21/04, E04G 21/28, E04G 21/24, B33Y 80/00, B33Y 70/00, B29C 64/232, B29C 64/106, E04B 1/35, B33Y 10/00, B33Y 30/00, B29C 64/00

(54) **A SYSTEM FOR CONSTRUCTING BUILDINGS**
EIN SYSTEM ZUM BAU VON GEBÄUDEN
UN SYSTÈME POUR LA CONSTRUCTION DE BÂTIMENTS

(30) Priority: 10.08.2018 IT 201800008060
(43) Date of publication of application: 16.06.2021
(73) Proprietor: CSP S.r.l., 48024 Massa Lombarda (Ravenna) (IT)
(72) Inventor: MORETTI, Massimo, 48024 Massa Lombarda (Ravenna) (IT)
(74) Representative: Conti, Marco
(86) International application number: PCT/IB2019/056762
(87) International publication number: WO 2020/031132

(56) References cited:
- EP-B1- 2 735 674
- CN-A- 107 447 985
- CN-U- 207 077 764
- RU-U1- 179 287
- US-A1- 2017 021 527

## Description

### Technical field

This invention relates to a system for constructing buildings comprising an apparatus for the 3d printing of buildings.

### Background art

Known in the prior art are apparatuses for the 3D printing of buildings. These apparatuses include a mobile extruder which releases construction material as it moves along a predetermined path as a function of the shape of the building to be constructed.

Patent document EP2610417A1 describes a gantry crane system comprising a robotic arm coupled to the extruder. The robotic arm moves in parallel with the ground on a supporting structure. The supporting structure must be large enough to surround and surmount the building to be constructed. The large size means massive dimensions, high costs and considerable difficulties setting up and dismantling the structure. Moreover, the supporting structure is difficult to adapt to distinctive features specific to the building to be constructed and cannot be modified along the way. The need for a supporting structure that is easy to assemble and that can be adapted in the course of construction therefore exists.

Patent documents WO2017209786A1, WO201898129A2 and US20180066441 A1 also relate to 3D printing for the building construction sector. These documents describe systems comprising a base, a telescoping lifting structure supported by the base, a rotary mechanism connected to the top of the lifting structure, a telescoping boom which is coupled to the rotary mechanism and which can be rotated and translated in a plane parallel to the ground, and an extruder connected to the end of the telescoping boom. In these systems, the lifting structure comprises a plurality of vertical, telescopic columns interconnected by diagonal arms, also telescopic; as a result, these systems, too, are highly complex and their complexity means not only high construction and maintenance costs but also difficulties transporting, assembling and dismantling the system. The telescoping lifting structure also poses problems of stability and strength; indeed, the higher the columns and/or the telescoping boom, the greater the risk of structural imbalance which, in the worst of cases, may cause the structure to topple.

Also, when the structure is installed on site, precision and ease of assembly are essential.

Moreover, other problems may arise if construction work on the building is interrupted; in particular, if the construction material remains in the extruder for extended lengths of time, it will becomes solid, resulting in damage to the extruder.

US 2017021527A1 discloses a system with the features of the preamble of claim 1.

### Disclosure of the invention

The aim of this invention is to provide a system and a method for building construction by 3D printing to overcome the above mentioned drawbacks of the prior art.

This aim is fully achieved by the system and method of this disclosure as characterized in the appended claims.

According to the invention, the system for constructing buildings comprises an apparatus for the 3D printing of buildings.

The apparatus comprises a lifting tower. The lifting tower extends along a lifting axis. In an embodiment, the lifting axis is oriented in a vertical direction.

The apparatus comprises an operating unit. The operating unit is movably coupled to the lifting tower.

The apparatus comprises a boom. The boom is connected to the operating unit. In an embodiment, the boom is fixed to the operating unit.

The apparatus comprises an extruder. The extruder is mounted on the boom. In an embodiment, the extruder is connected to the boom. In an embodiment, the extruder is slidable on the boom. The extruder is configured to deliver a fluid construction material. The construction material may be a cementitious material or a low-cost construction material based on mud and straw (for example, rice straw).

The operating unit is slidable along the lifting tower to lift and lower the boom. In an embodiment, the operating unit is slidable along the full height of the lifting tower In an embodiment, the operating unit is slidable between the base and the summit of the lifting tower.

That way, the lifting tower may be made as a single piece and the boom (hence the extruder) lifted by sliding the operating unit along the tower; thus, the boom (hence the extruder) can be lifted and lowered along the vertical direction while the tower remains fixed. This system is extremely simple not only to make and maintain but also to transport, assemble and dismantle.

In an embodiment, the operating unit has an annular shape defining a central opening. In an embodiment, the operating unit surrounds the lifting tower. In an embodiment, the lifting tower is positioned inside the central opening of the operating unit.

Thus, the tower and the operating unit are simple to make and can be easily assembled and dismantled.

In an embodiment, the apparatus comprises a lifting actuator. The lifting actuator is configured to move the operating unit along the vertical direction. The lifting actuator is configured to drive the operating unit to slide along the lifting tower. In an embodiment, the lifting actuator is mounted on the operating unit.

In an embodiment, the apparatus comprises a lifting screw. The lifting screw extends in parallel with the lifting axis (along the vertical direction). In an embodiment, the lifting screw is fixed to the lifting tower. In an embodiment, the lifting screw has a lower end which is fixed to the base of the lifting tower and an upper end which is fixed to the summit of the lifting tower. In an embodiment, the lifting screw is fixed to the lifting tower.

In an embodiment, the apparatus comprises a lead nut connected to the operating unit. In an embodiment, the apparatus comprises a plurality of lead nut bearings defining a coupling between the lead nut and the operating unit (more specifically, the first part of the operating unit). Thus, the lead nut can rotate without transmitting the rotational motion to the operating unit. On the other hand, a movement of the lead nut along the vertical direction is transmitted to the operating unit.

In an embodiment, the lifting actuator comprises a first motor. Preferably, the first motor is an electric motor. The first motor is configured to rotate the lead nut relative to the lifting screw. That way, by rotating around the screw, the lead nut moves along the vertical direction (up or down, depending on the rotation direction), causing the operating unit to move translationally along the vertical direction.

In an embodiment, the operating unit comprises a first part which is coupled to the lifting tower to slide along the lifting tower. In an embodiment, the lead nut is fixed to the first part. In an embodiment, the operating unit comprises a second part which is rotatably coupled to the first part to rotate about the lifting axis (preferably through 360°). In an embodiment, the boom is connected to the second part of the operating unit. In an embodiment, the boom is connected to the operating unit by a plurality of fasteners (preferably screws). The plurality of fasteners (screws) allows the boom to be quickly fitted to and removed from the operating unit. In particular, in a preferred embodiment, the boom is fixed to the second part of the operating unit. Thus, the boom can rotate about the lifting axis and translate along the vertical direction.

Thanks to the actuator being coupled to a lead nut and screw system, the boom is prevented from falling in the event of a power down (in effect, in such a case, the operating unit is held at a fixed height by the threading of the lead screw and lead nut). Indeed, this system allows printing to be easily interrupted and resumed. Further, the lead nut and screw system guarantees precise positioning of the operating unit.

In an embodiment, the apparatus comprises a rotation actuator. In an embodiment, the rotation actuator is mounted on the operating unit. In an embodiment, the rotation actuator includes a second motor, configured to make the second part of the operating unit rotate about the lifting axis. The second motor is preferably an electric motor. Thus, the boom can rotate about the lifting axis.

In an embodiment, the operating unit comprises a plurality of thrust bearings. The plurality of thrust bearings defines a rotary coupling between the first part of the operating unit and the second part of the operating unit (by rotary coupling is meant that the second part is free to rotate relative to the first part). In an embodiment, the thrust bearings of the plurality are ball bearings.

In an embodiment, the plurality of thrust bearings includes a first ring of thrust bearings. In an embodiment, the plurality of thrust bearings includes a second ring of thrust bearings.

In an embodiment, the operating unit comprises a plurality of centring bearings. The centring bearings of the plurality define a slidable coupling between the operating unit and the lifting tower. In an embodiment, a first group of the centring bearings defines a slidable coupling between the first part of the operating unit and the lifting tower and a second group of the centring bearings defines a slidable coupling between the second part of the operating unit and the lifting tower.

In an embodiment, the apparatus comprises a translation actuator configured to translate the extruder along the boom. Thus, since the boom can rotate about the lifting axis (preferably by up to 360°) and the extruder can slide along the boom, the extruder can move in a circular printing area.

In an embodiment, the boom has a first end which is fixed to the operating unit and a second end, opposite to the first end; in an embodiment, the translation actuator is configured to move the extruder along an axis of the boom (along which the boom extends) between the first end and the second end. In an embodiment, the translation actuator comprises a belt that is connected to the extruder. In an embodiment, the translation actuator comprises a third motor (preferably electric) configured to move the belt. In an embodiment, the third motor is fixed to the boom. Thus, the extruder can move along the boom towards and away from the lifting axis. In an embodiment, the control unit is programmed to store the position of the extruder at any instant in time. In an embodiment, when printing is resumed after an interruption, the control unit is programmed to relocate the extruder to its position at the moment of the interruption.

In an embodiment, the extruder comprises a quality sensor, connected to the control unit to send it a signal representing one or more physical properties of the zone on which the extrusion nozzle is about to place material and/or of the zone on which the extrusion nozzle has placed the material, in order to check that the material has been correctly placed.

The lifting tower comprises a base. The apparatus comprises a base anchoring system. The base anchoring system is configured to anchor the base of the lifting tower to the ground. In an embodiment, the base anchoring system includes a lower plate. The lower plate is configured to rest on the ground. In an embodiment, the base anchoring system includes an upper plate. The base of the lifting tower is connected to the upper plate. In an embodiment, the base anchoring system includes a plurality of levelling connectors. The plurality of levelling connectors fastens the lower plate to the upper plate. In an embodiment, the plurality of levelling connectors is adjustable to vary the distance between the lower plate and the upper plate. Each levelling connector includes a screw, for example. Preferably, the plurality of levelling connectors is adjustable to vary the orientation of the lower plate relative to the upper plate; more specifically, the relative orientation between the lower plate and the upper plate is adjustable between at least a first orientation and a second orientation, different from the first orientation. For example, on flat (horizontal) ground, the upper plate can be placed parallel to the lower plate (in particular, both the upper plate and the lower plate can be positioned horizontally, perpendicularly to the weight force), whilst on sloping ground, the lower plate can be placed at a first orientation, parallel to the ground, and the upper plate at a second orientation - horizontal, for example. Adjusting the connectors to vary the relative orientation between the upper plate and the lower plate may be alternative or additional to the adjustment to vary the distance. Thus, the upper plate is variable in orientation and/or distance relative to the lower plate.

That way, the position of the lifting tower can be adjusted to adapt to the conditions of the ground (for example, the tower can be erected even on irregular or sloping ground and the tower can be raised even if it rests in a hollow in the ground or, vice versa, lowered if it rests on an elevation on the ground.

In an embodiment, the apparatus comprises at least one laser pointer. In an embodiment, the at least one laser pointer is located on the operating unit. In an embodiment, the at least one laser pointer is located on the boom. In an embodiment, the at least one laser pointer is located on the extruder. In an embodiment, the at least one laser pointer is located on the summit of the lifting tower.

In an embodiment, the at least one laser pointer is located at a predetermined position. The at least one laser pointer is preferably positioned at the predetermined position repeatably and with a high degree of precision (in the order of hundredths of a millimetre).

In an embodiment, the apparatus comprises a plurality of targets. The targets of the plurality of targets are positioned at respective (predetermined) reference positions. The at least one laser pointer is configured to project a laser beam on one or more targets of the plurality of targets.

For example, a target can be positioned at each point (on the ground) where the lifting tower must be placed during the construction of the building; these points are automatically identified by the apparatus itself thanks to the laser pointer located at the summit of the lifting tower.

In an embodiment, the apparatus comprises a control unit.

The control unit is programmed to calculate a printing path as a function of the shape of the building to be constructed.

The control unit is programmed to receive a position signal from the at least one laser pointer. In an embodiment (in which the at least one laser pointer is positioned on the operating unit), the position signal represents the position of the operating unit. In an embodiment (in which the at least one laser pointer is positioned on the boom), the position signal represents the position of the boom. In an embodiment (in which the at least one laser pointer is positioned on the extruder), the position signal represents the position of the extruder. In an embodiment, the apparatus comprises a laser pointer positioned at an upper end of the lifting tower. In an embodiment, the apparatus comprises a first laser pointer positioned on the operating unit, a second laser pointer on the boom and a third laser pointer on the extruder; in such a case, the first, second and third laser pointers are connected to the control unit to send it respective position signals representing the positions of the operating unit, of the boom and of the extruder.

In an embodiment, the control unit is programmed to control a movement of the operating unit or of the boom or of the extruder as a function of a preset printing path and of the position signal (received from the at least one laser pointer).

Thanks to the at least one laser pointer, it is possible to determine and govern with a good degree of precision the position of the apparatus (or a part thereof) during printing operations, and to relocate it correctly in the event of an interruption in printing operations (for example on account of a mechanical problem or the need to replace parts of the apparatus).

In an embodiment, the apparatus comprises a boom bending sensor. The boom bending sensor is configured to detect a boom bending signal representing the bending of the boom. The control unit is programmed to receive the boom bending signal and to control the lifting actuator as a function of the boom bending signal. More specifically, the more the boom bends downwards, the more the control unit lifts the operating unit along the vertical direction.

In an embodiment, the extruder includes an elongate channel extending between an inlet and an outlet. In an embodiment, the extruder includes an auger rotating inside the channel. In an embodiment, the apparatus includes an extruder actuator. The extruder actuator includes a fourth motor (preferably electric) configured to make the extruder auger rotate. In an embodiment, the extruder is configured to receive, at the inlet, a flow of construction material in raw form and to deliver, at the outlet, a fluid construction material. The function of the rotary auger is to meter (and to fluidize) the construction material (by friction). In addition, the auger may be stopped at any time, thus interrupting the supply of construction material when necessary. In effect, in an embodiment, the control unit controls the rotation of the auger on the basis of the printing path.

In an embodiment, the control unit is configured to instruct the auger to continue rotating until after the construction material stops entering the channel. That way, the auger empties the channel of any construction material that may still be inside it.

In an embodiment, the control unit is positioned inside the operating unit.

In an embodiment, the apparatus comprises a safety device. The safety device is configured to detect a collision between the boom and objects and/or persons. The safety device is connected to the control unit to send a signal to the control unit in the event of such a collision. The control unit is programmed to stop the system (for example by cutting the power supply to the system) in response to receiving the signal from the safety device). The safety device includes a guard cable (or rope). The guard cable is positioned along the boom. More specifically, the guard cable has a first end inside the operating unit, runs along the boom from the operating unit to the end of the boom and back from the end of the boom to the operating unit and has a second end inside the operating unit.

In an embodiment, the apparatus includes a user interface configured to allow a user to send instructions to the apparatus. For example, through the user interface, the user can control one or more operating parameters of the apparatus, including one or more of the following parameters: extrusion speed; extrusion flow percentage; pause times. In particular, through the user interface, the user can instruct the apparatus to pause (and resume operating after the pause).

The user interface preferably comprises a microphone to receive control signals in the form of vocal commands from the user (or operator). Alternatively, or in addition to the microphone, the user interface may also include a screen and/or a keyboard to receive the control signals. It should be noted, however, that the use of vocal commands is especially convenient because it allows an operator to control the 3D printing apparatus without using his hands and thus without having to interrupt other work he is doing on the construction site. If there are a plurality of 3D printing apparatuses on the construction site, each one may have a name assigned to it so that the operator can call each printing apparatus by name to control each machine separately. The user interfaces of the system apparatuses can also be used to synchronize the apparatuses with each other; for example, synchronization can be performed through a synchronize command (preferably vocal) sent simultaneously to the interfaces of the apparatuses of the system. In an embodiment, the apparatus comprises an additional extruder. The additional extruder is mounted on the boom. In an embodiment, the apparatus comprises an additional translation actuator configured to translate the additional extruder along the boom. In an embodiment, the additional translation actuator comprises an additional belt that is connected to the additional extruder. In an embodiment, the additional translation actuator comprises a fourth motor (preferably electric) configured to move the additional belt.

Thus, the additional extruder can move along the boom towards and away from the lifting axis, independently of the movement of the extruder. In an embodiment, the extruder is configured to deliver a first fluid construction material to make an outside part of the wall of the building, whilst the additional extruder is configured to deliver a second fluid construction material to make an inside part of the wall of the building.

In an embodiment, the system comprises a plurality of apparatuses for the 3d printing of buildings according to one or more of the embodiments discussed above. The system also comprises a supporting structure. The lifting tower of the apparatus has a summit that is fastened to the supporting structure. In an embodiment, the summit of the lifting tower of the apparatus is removably fixable to the supporting structure. This prevents the lifting tower from toppling during movement of the operating unit and/or of the boom.

The supporting structure includes a respective base (at least one) and a respective base anchoring system (at least one), configured to anchor the base of the supporting structure to the ground. The base of the apparatus can rest on and can preferably additionally be fastened to the ground at a first supporting point and the base of the structure can rest on and can preferably additionally be fastened to a second supporting point, different from the first supporting point.

One or more of the aspects described in relation to the base anchoring system of the apparatus also apply to the base anchoring system of the supporting structure; in particular, the base anchoring system of the supporting structure may also include a lower plate, an upper plate and a plurality of levelling connectors configured to vary the distance and/or relative orientation between the lower plate and the upper plate.

Further, the supporting structure comprises a summit which is fixable to the summit of the lifting tower of the apparatus. Thus, in the system the apparatus has a base that is anchored (removably) to the ground by the base anchoring system and a summit that is anchored (removably) to the supporting structure.

In an embodiment, the supporting structure comprises at least one column (preferably, a plurality of columns). The columns extend along respective axes oriented in the vertical direction. In an embodiment, the height of the columns (measured along the vertical direction) is equal to the height of the lifting tower of the apparatus (measured along the vertical direction). The supporting structure comprises, for each column, a respective base anchoring system configured to anchor the base of the column to the ground. Thus, in the case where the supporting structure comprises a plurality of columns, it also comprises a plurality of base anchoring systems.

In an embodiment, the supporting structure comprises a plurality of crosspieces. The crosspieces extend along respective axes oriented in a transverse direction, perpendicular to the vertical direction. Each crosspiece extends between a first end and a second end, each of which is connected to the summit of a column of the supporting structure and/or to the summit of the lifting tower of the apparatus.

In an embodiment, the system comprises one or more fastening modules (or joints). In an embodiment, the system comprises a plurality of fastening modules (or joints). Preferably, the first end and the second end of each crosspiece are each connected (removably) to the summit of a column of the supporting structure and/or to the summit of the lifting tower of the apparatus by means of a respective fastening module. Thus, each fastening module is configured to (removably) connect the summit of a column or of the lifting tower to a crosspiece. Preferably, each fastening module is configured to (removably) connect the summit of a column or of the lifting tower to a plurality of crosspieces.

It should be noted that the system allows interchangeability between the lifting tower of the apparatus and each column of the supporting structure. Each fastening module includes an underside face, a top face and a plurality of side faces. The top face is parallel to the underside face. The side faces are connected to the top face and to the underside face. In an embodiment, the plurality of side faces is composed of three side faces which are inclined to each other (for example by 120°). In this case, the module will be a five-face module (or joint).

In an embodiment, the top face of each fastening module of the plurality of fastening modules is removably fastenable to the summit of the lifting tower of the apparatus for the 3D printing of buildings. In an embodiment, the top face of each fastening module of the plurality of fastening modules is removably fastenable to (the summit of) each column of the plurality of columns. In an embodiment, each side face of the plurality of side faces of each fastening module of the plurality of fastening modules is removably fastenable to (one end) of each crosspiece of the plurality of crosspieces. In an embodiment, the system includes a plurality of base anchoring systems. In an embodiment, each column has a base. The base is fastenable to a respective base anchoring system of the plurality of base anchoring systems. Further, the base of each column is fastenable to the top face of a fastening module (to make a multi-storey system).

In an embodiment, the base can be anchored directly to the ground.

In an embodiment, a hole is defined in the base anchoring system (and/or in the base). The hole is configured to facilitate positioning and assembling of the tower.

Thus, the system is modular and can be assembled and disassembled (according to the shape of the building to be constructed). During the construction of the building, the structure can be dismantled and reassembled in a plurality of configurations, according to the shape of the building to be constructed. In effect, each module is connectable to two columns (a first column connectable to the underside face and a second column connectable to the top face: since the structure may have a plurality of storeys) and to a plurality of crosspieces (as many as there are side faces). Thus, the system has a grid-like structure where one or more 3D printing apparatuses can be added and removed.

In an embodiment, a column of the plurality of columns can be replaced with the apparatus for the 3D printing of buildings. Thus, the apparatus for the 3D printing of buildings may define a column of the supporting structure. This feature makes the system highly versatile and adaptable, able to adopt a wide variety of configurations according to the shape of the building to be constructed. In effect, the fastening module can be fastened to the summit (or to the base) of the lifting tower of the 3D printing apparatus.

The system might also comprise a plurality of 3D printing apparatuses, each defining a column of the plurality of columns. The plurality of 3D printing apparatuses are preferably controlled by a control unit which enables the apparatuses to work together for the construction of the building (collaborative printing). The apparatuses are thus synchronized with each other. Preferably, the 3D printing apparatuses of the plurality are suitably positioned in the system as early as the design development stage.

The targets of the plurality of targets (or some of them) may be placed at defined positions within the system: for example, on the base anchoring systems, on the fastening modules, on the columns or on the crosspieces; the targets of the plurality of targets (or some of them) may also be placed at defined positions on the ground.

In an embodiment, each 3D printing apparatus of the plurality of apparatuses comprises a laser system and the laser systems of all the apparatuses communicate with each other in order to check the levels of the apparatuses.

In an embodiment, the 3D printing apparatus comprises an anti-collision system configured to prevent it from colliding with objects or persons. The anti-collision system may include an optical sensor connected to the control unit. In an embodiment, the control unit is programmed to stop the apparatus if it receives a signal from the anti-collision system.

In an embodiment, each apparatus includes a respective anti-collision system configured to prevent it from colliding with objects, persons or other apparatuses. The anti-collision system may be integrated in (or may coincide with) the safety device.

In the embodiment where the system comprises a plurality of apparatuses, each apparatus may comprise a respective control unit, in communication with the control units of the other apparatuses (preferably by a wireless communications network such as a Wi-Fi or Bluetooth network).

More specifically, in an embodiment, the control unit of one of the apparatuses of the system operates as "master" and calculates the working trajectory of all the apparatuses in the system as a function of a desired building profile (communicated by the operator); the control units of the other apparatuses in the system (operating as the "slaves") receive the respective working trajectories from the "master" control unit.

In a further embodiment, the system includes a main control unit which calculates the working trajectory of all the apparatuses in the system as a function of a desired building profile (communicated by the operator) and communicates the respective trajectories to the control units of the other apparatuses in the system.

The system may also include a screen, connected to the control units of the apparatuses in the system (more specifically, to the control unit of the "master" apparatus, to the main control unit or to all the control units in the system); preferably, the screen is connected to the control units remotely through a wireless network. The screen allows the operator to communicate the desired building profile and/or to manually control the working trajectories of the apparatuses in the system and/or to communicate the desired extrusion parameters and/or control the pause times. The screen may be connected (through the wireless network) or integrated in the user interface including the microphone.

In an embodiment, the system includes a protection system (or device). The protection system includes one or more canvases (or canopies) connectable (or removably connectable) to the supporting structure and configured to protect the 3D printing apparatus and/or the building construction workers against weather conditions such as sun, wind and/or rain. The one or more canvases are connectable to the crosspieces, and/or to the fastening modules, and/or to the columns (preferably to the summits of the columns); the one or more canvases may be connected by means of suitable hooks or straps. The canvases may also be connected to each other and/or to the ground by means of further hooks or straps. The system has numerous advantages. Since the system is made up of modular parts that can be assembled and disassembled during construction, its size is virtually infinite although each part is limited in size. The system is quick and easy to set up and dismantle, easy to transport (for example on a motor vehicle) and easy to maintain. Furthermore, the supporting structure prevents the lifting tower from toppling and dampens oscillations due not only to external agents (such as wind) but also to the movements of the boom and extruder (which inevitably increase with increasing height). Moreover, the supporting structure (columns and crosspieces) can also be used to support the protections necessary during printing operations (for example, removable guards) and/or to support the power cables or the tubes in which the construction materials flow. The modular system is also useful at the construction site design stage because it provides fixed reference points which subsequently allow controlling the movement of the boom or of the extruder. The system is also very precise.

Although the system has been described with reference to the technical field of 3D printing of buildings, it should be noted that it is also applicable in other sectors. For example, the system including one or more columns, one or more crosspieces and a fastening module (having one or more of the features set out herein) may be used to construct a concert stage.

This disclosure also provides a fastening module for a supporting structure (having one or more of the features set out herein), which does not form part of the invention. More specifically, this disclosure provides a fastening module having a top face, an underside face and a plurality of side faces (the module being, in this case, a five-face joint).

The invention also provides a method for the 3D printing of buildings according to claim 13.

The method comprises a step of preparing a lifting tower, extending along a lifting axis oriented in a vertical direction.

The method comprises a step of preparing an operating unit which is connected to the lifting tower.

The method comprises a step of preparing a boom which is connected to the operating unit.

The method comprises a step of preparing an extruder which is mounted on the boom.

The method comprises a step of moving the operating unit relative to the lifting tower. The step of moving the operating unit comprises a step of sliding the operating unit along the lifting tower to lift and lower the boom.

In an embodiment, the step of sliding the operating unit along the lifting tower comprises sliding an annular structure (defining the operating unit) around the tower, which is disposed inside a central opening of the annular structure.

In an embodiment, the step of sliding the operating unit along the lifting tower comprises sliding a first and a second part of the operating unit as one along the lifting axis.

In an embodiment, the step of sliding the operating unit along the lifting tower comprises rotating a lead nut, attached to the operating unit, around a lifting screw which is fixed (hence attached to the lifting tower).

The method comprises a step of delivering a fluid construction material through the extruder.

More specifically, in an embodiment, the step of moving the operating unit comprises a step of sliding a first part and a second part of the operating unit along the lifting tower. In an embodiment, the step of sliding is performed by rotating a lead nut, which is fixed to the first part, relative to a fixed screw which is parallel to the lifting tower. In an embodiment, the step of moving the operating unit also comprises a step of rotating a second part of the operating unit about the lifting axis (where the boom is fixed to the second part).

In an embodiment, the step of moving the operating unit comprises a step of projecting a laser beam on one or more targets that have been previously positioned at respective reference positions, in order to derive a position signal representing the position of the operating unit or of the boom or of the extruder. In an embodiment, the step of moving the operating unit comprises a step of sending the position signal to a control unit. In an embodiment, the step of moving the operating unit comprises step of moving the operating unit or the boom or the extruder as a function of a preset printing path and of the position signal.

The method comprises a step of fastening the summit of the lifting tower to a lifting structure. The step of fastening precedes the step of moving the operating unit. In an embodiment, the summit of the lifting tower is fixed to a fastening module. In an embodiment, the summit of the lifting tower is fixed to an underside face of a fastening module.

In an embodiment, the method comprises a step of anchoring a base of the lifting tower to a base anchoring system. In an embodiment, the method comprises a step of anchoring a base of the lifting tower to an upper plate of a base anchoring system. In an embodiment, the method comprises a step of anchoring a lower plate of a base anchoring system to the ground. In an embodiment, the method comprises a step of adjusting the distance between the upper plate and the lower plate of the base anchoring system (by adjusting levelling connectors).

In an embodiment, the supporting structure comprises a plurality of columns and a plurality of crosspieces connected to each other. In an embodiment, the step of fastening includes replacing a column of the plurality of columns with the lifting tower. In an embodiment, the step of fastening includes replacing more than one column of the plurality of columns with more than one lifting tower.

In an embodiment, the step of fastening includes replacing the lifting tower with a column of the plurality of columns. In an embodiment, the step of fastening includes replacing more than one lifting tower with more than one column of the plurality of columns.

In an embodiment, the method comprises a step of preliminary designing. In the step of designing, the configuration of the system (and possibly its development during the construction of the building) is defined. In particular, in the step of designing, a position (or two or more positions) for the lifting tower (or for the lifting towers) is defined. In an embodiment, the positions of the columns and crosspieces and their development during the construction of the building are also defined. In an embodiment, in the step of designing, the positions of the targets used as references for the laser pointers are defined. In an embodiment, the step of designing includes calibrating one or more laser pointers for which the targets constitute the reference points.

In the step of designing, numerous variables are taken into account, including the desired shape of the building to be constructed, the material available (or the estimated costs of the material) and the time scale involved. In an embodiment, the step of preparing the material (apparatus/apparatuses and supporting structure) follows the step of designing.

In an embodiment, the method comprises a step of preparing a base anchoring system fastened to the base of the lifting tower of the apparatus. In an embodiment, the step of preparing the base anchoring system comprises preparing a pin driven into the ground at a predetermined position. In an embodiment, a base hole is defined in the base anchoring system. In an embodiment, the base hole continues into the lifting tower (where a hole along the lifting axis is thus defined).

In an embodiment, the step of preparing comprises assembling the base anchoring system in such a way that the pin previously driven into the ground at a predetermined position enters the base hole. If the base of the lifting tower rests directly on the ground (without a system for anchoring the base to plates), the pin is driven directly into the hole defined in the lifting tower. That way, the tower can be mounted easily and precisely at the required position.

The correct position of the lifting tower can be checked if a target is placed on the pin in the ground, a laser pointer is placed at the summit of the lifting tower and the tower is traversed from the summit to the base by a through hole (which may, if necessary, continue into the plates of the base anchoring system): that way, if the lifting tower is correctly positioned, the laser pointer on the summit of the tower can see the target on the pin in the ground. In an embodiment, the control unit is connected to the laser pointer to verify the correct position of the lifting tower (and to send an alarm signal if the tower is not correctly positioned).

The positioning procedure outlined above can, with the necessary changes made, also be used to position the columns of the supporting structure. That way, the lifting tower (or towers) and the columns can be precisely positioned quickly and easily. The pin driven in the ground can also be used for rapidly geolocating the 3D printing apparatus.

In an embodiment, the apparatus comprises an inclinometer. In an embodiment, the inclinometer includes a gyroscope sensor. In an embodiment, the inclinometer includes a theodolite.

The inclinometer is preferably positioned at the summit of the lifting tower. In an embodiment, the method comprises a step of checking that the apparatus is correctly positioned. The step of checking comprises reading a signal sent by the inclinometer (for example, on a user interface). The method may comprise a step of rectifying the position of the tower if the result of the step of checking is that the tower is not perpendicular to the ground. The step of rectifying may be accomplished by adjusting the levelling connectors of the base anchoring system.

### Brief description of the drawings

These and other features of the invention will become more apparent from the following description of a preferred embodiment of it, illustrated by way of non-limiting example in the accompanying drawings, in which:

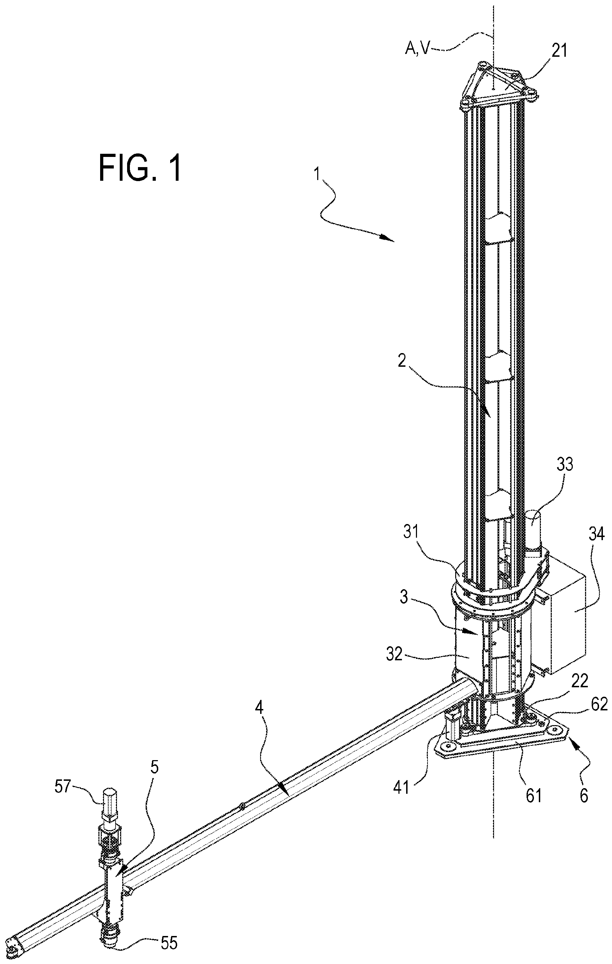

- Figure 1 shows a perspective view of an apparatus for the 3D printing of buildings;

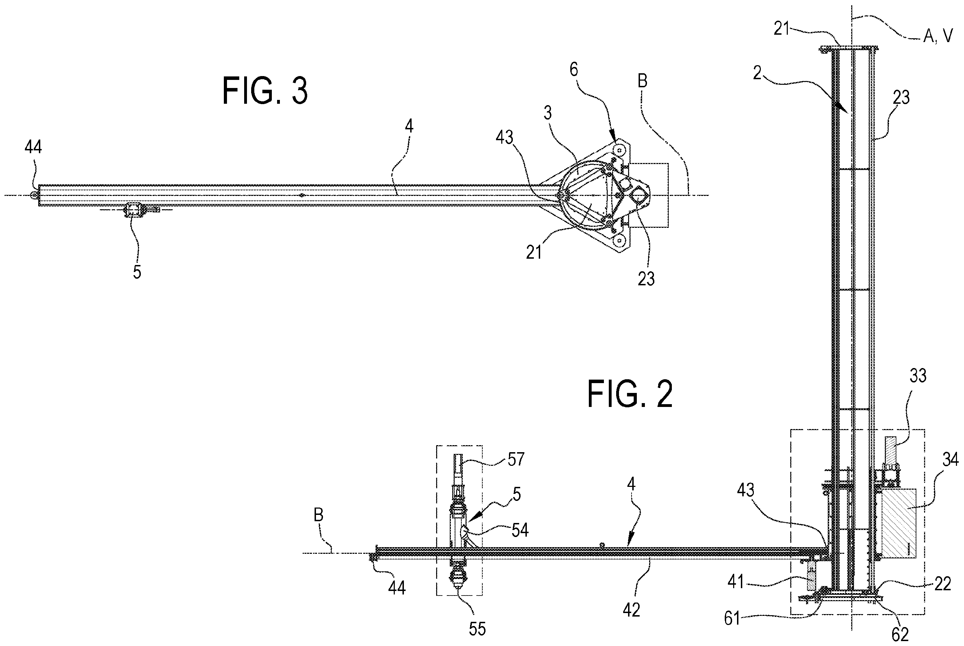

- Figure 2 illustrates the apparatus of Figure 1 in a side view;
- Figure 3 shows a top view of the apparatus of Figure 1;

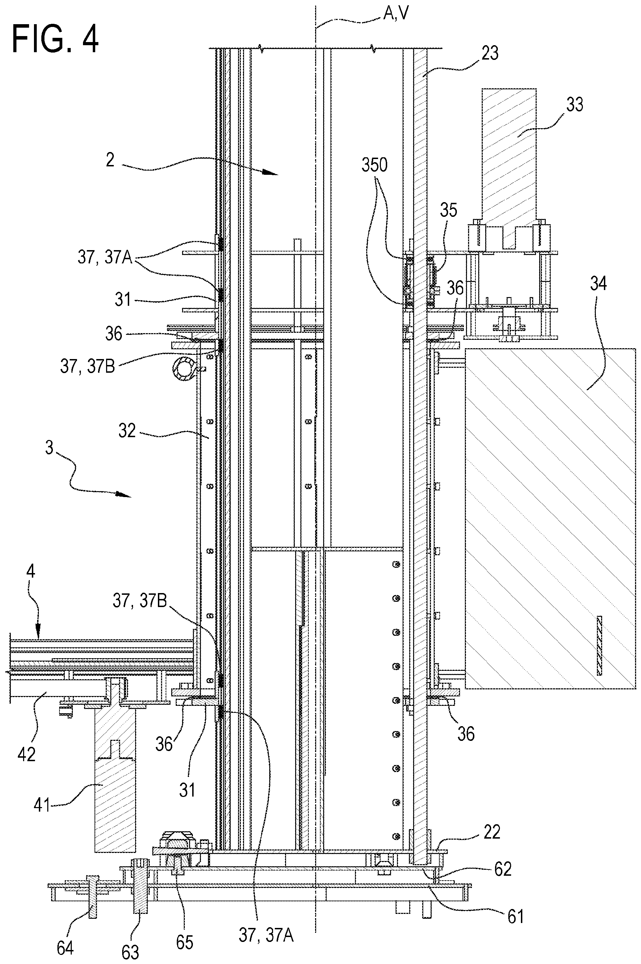

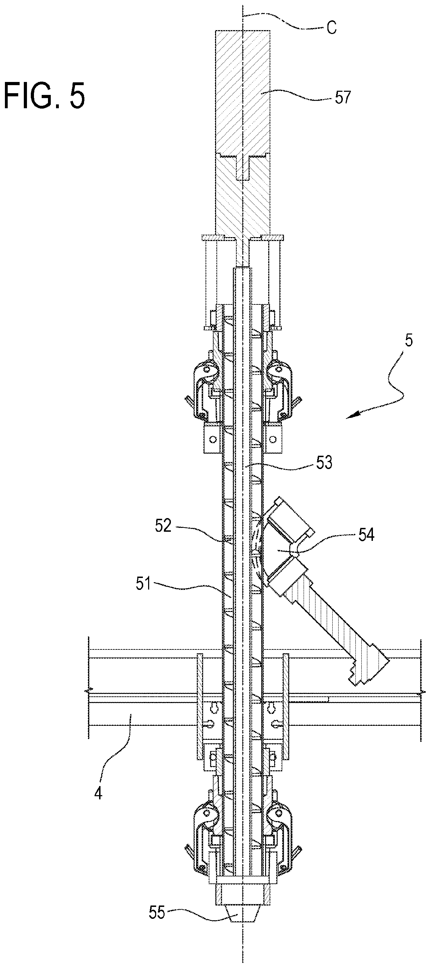

- Figures 4 and 5 are cross sections of respective details of the apparatus of Figure 1;

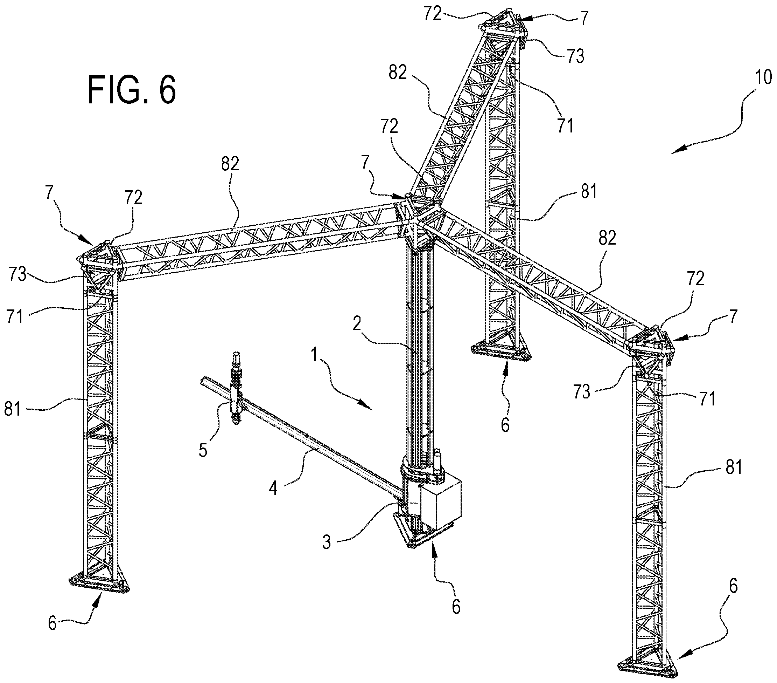

- Figure 6 shows a perspective view of a system for the 3D printing of buildings according to the invention;

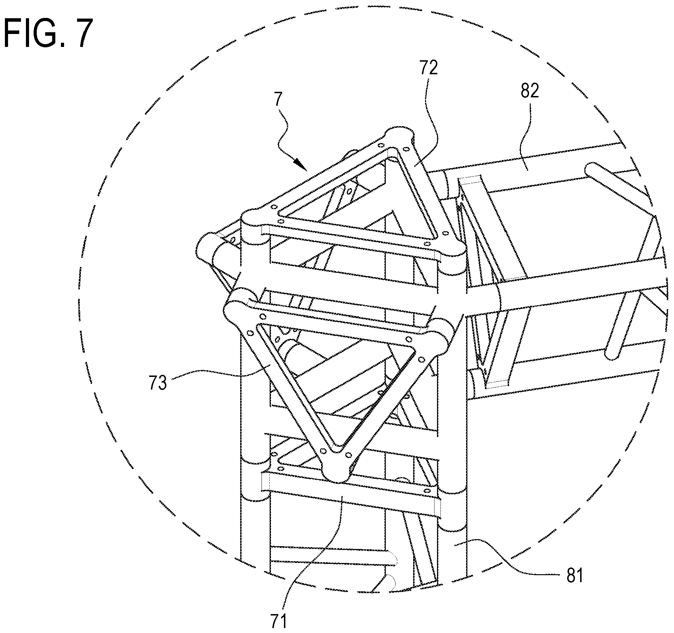

- Figure 7 illustrates a detail of the system of Figure 6 in a perspective view;

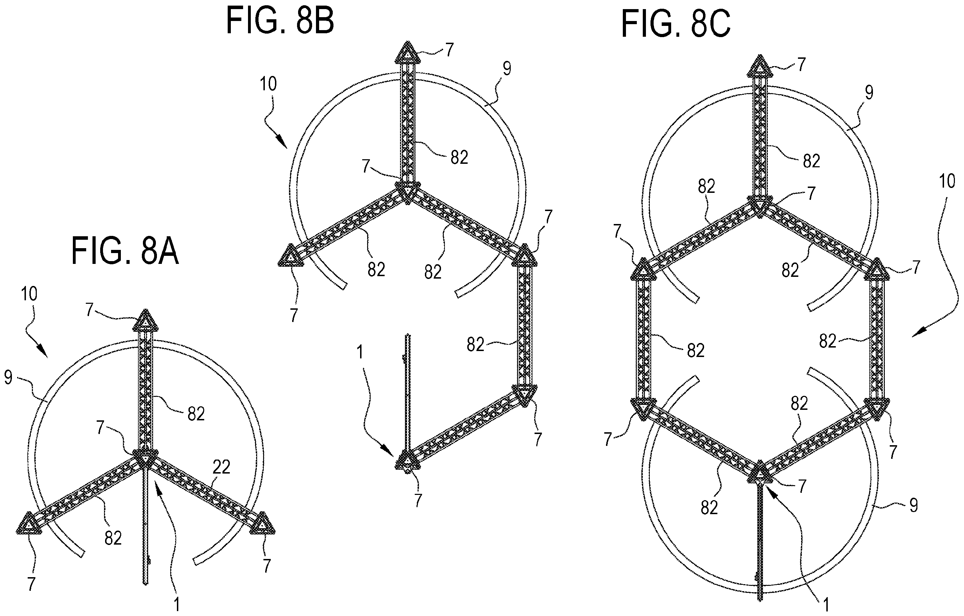

- Figures 8A, 8B and 8C illustrate the system of Figure 6 in respective top views;

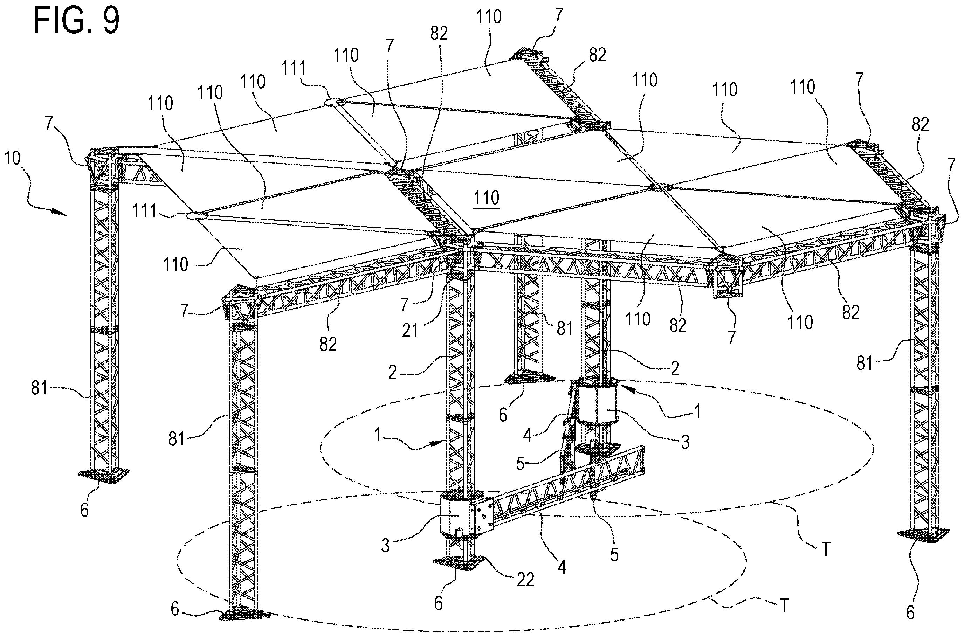

- Figure 9 shows a perspective view of a further embodiment of the system for the 3D printing of buildings according to the invention;

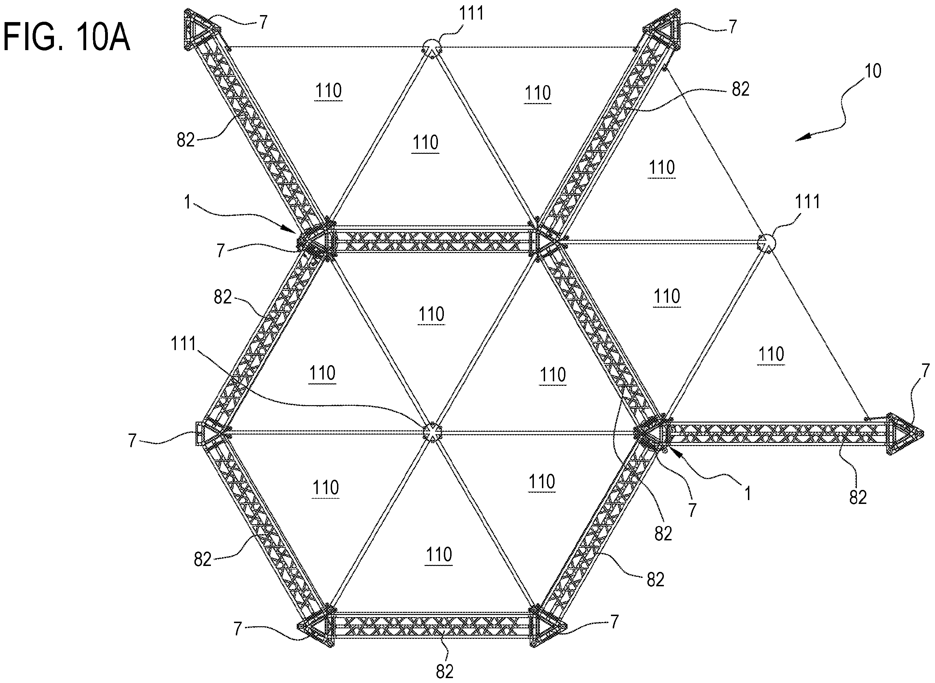

- Figure 10A illustrates the system of Figure 9 from above;

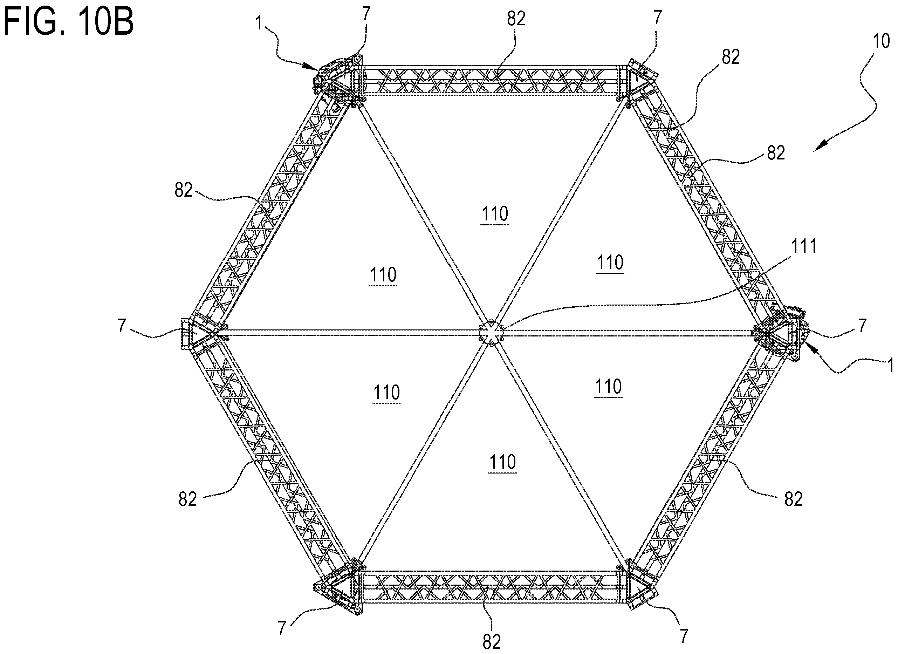

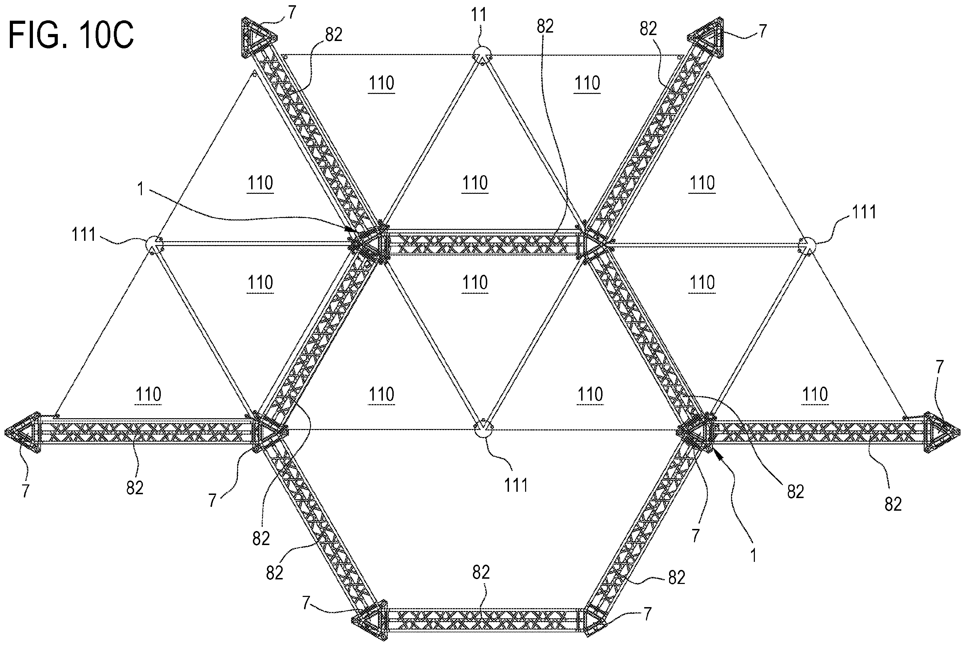

- Figures 10B and 10C illustrate further configurations of the system of Figure 9 in respective top views.

### Detailed description of preferred embodiments of the invention

With reference to the accompanying drawings, the numeral 1 denotes an apparatus for the 3D printing of buildings 9.

The apparatus 1 comprises an elongate lifting tower 2 extending along a lifting axis A between a base 22 and a summit 21. The lifting axis A is oriented along a vertical direction V.

The apparatus 1 comprises un operating unit 3, slidable along the lifting tower 2. The operating unit 3 has an annular shape defining a central opening. The lifting tower 2 is positioned inside the central opening of the operating unit 3.

The operating unit 3 comprises a first part 31 and a second part 32. Both the first part 31 and the second part 32 of the operating unit 3 are annular in shape. Thus, the central opening traverses both the first part 31 and the second part 32 of the operating unit 3. In an embodiment, the first part 31 comprises an upper portion and a lower portion. The first portion of the first part 31 is disposed at an annular upper end of the second part 32. The second portion of the first part 31 is disposed at an annular lower end of the second part 32 (opposite to the annular upper end). The first and second portions of the first part 31 are fixed relative to each other.

Both the first part 31 and the second part 32 are slidable along the lifting tower 2. The operating unit 3 comprises a plurality of centring bearings 37. The centring bearings 37 are located inside the central opening of the operating unit 3. A first group 37A of the centring bearings 37 defines a slidable coupling between the first part 31 of the operating unit 3 and the lifting tower 2. A second group 37B of the centring bearings 37 defines a slidable coupling between the second part 32 of the operating unit 3 and the lifting tower 2.

The apparatus 1 comprises a lifting actuator, configured to move the operating unit 3 along the vertical direction V. The lifting actuator is positioned on board the operating unit 3 (and thus moves together with the operating unit 3 along the vertical direction V). In an embodiment, the lifting actuator includes a first electric motor 33.

The apparatus 1 comprises a lifting screw 23 extending in parallel with the lifting tower 2 (that is, along the vertical direction V). The apparatus 1 comprises a lead nut 35 fixed to the operating unit 3 (more specifically, to the first part 31 of the operating unit 3). The first motor 33 is configured to rotate the lead nut 35 relative to the lifting screw 23.

In an embodiment, the apparatus 1 comprises a plurality of lead nut bearings 350 defining a coupling between the lead nut 35 and the operating unit 3 (more specifically, the first part 31 of the operating unit 3). The lead nut bearings 350 allow the lead nut 35 to rotate idly relative to the first part 31 of the operating unit 3. On the other hand, the lead nut bearings 350 transmit motion from the lead nut 35 to the first part 31 of the operating unit 3 along the lifting axis A.

The second part 32 of the operating unit 3 is coupled to the first part 31 of the operating unit 3 in such a way as to slide therewith along the lifting axis A and also to rotate about the lifting axis A (while the first part 31 does not rotate).

The operating unit 3 comprises a plurality of thrust bearings 36. In an embodiment, the plurality of thrust bearings 36 includes a first ring and a second ring of thrust bearings. The first ring and the second ring have an annular shape around the lifting axis A. The first ring of thrust bearings 36 is interposed between the upper portion of the first part 31 of the operating unit and the second part 32. The second ring of thrust bearings 36 is interposed between the second part 32 and the lower portion of the first part 31 of the operating unit 3. Thus, the thrust bearings 36 of the plurality are interposed between the first part 31 and the second part 32 of the operating unit 3. The thrust bearings 36 define a rotary coupling between the first part 31 and the second part 32 of the operating unit 3.

The apparatus 1 comprises a rotation actuator. The rotation actuator is mounted on the operating unit 3. The rotation actuator is configured to rotate the second part 32 relative to the first part 31 of the operating unit 3. The rotation actuator includes a second motor 34. Preferably, the second motor 34 is an electric motor. The second motor 34 makes the second part 32 of the operating unit 3 rotate about the lifting axis A.

The apparatus 1 comprises a boom 4. The boom 4 is connected to the second part 32 of the operating unit 3. The boom 4 is preferably fastened to the second part 32 of the operating unit 3 by a plurality of connectors (for example, screws). The boom 4 is elongate and extends along a boom axis B between a first end 43 and a second end 44. The first end 43 is connected to the operating unit 3. The boom axis B is preferably perpendicular to the lifting axis A.

The apparatus 1 comprises an extruder 5. The extruder 5 is mounted on the boom 4. The extruder 5 is slidable along the boom 4. The extruder 5 is slidable along the boom axis B. The apparatus 1 comprises a translation actuator, configured to move the extruder 5 along the boom axis B.

The boom 4 comprises a transmission belt 42. The translation actuator comprises a third motor 41. The third motor 41 is configured to move the transmission belt 42. The translation actuator (that is, the third motor 41) is mounted on the boom 4.

The extruder 5 comprises an inlet device 54 for the construction material. The inlet device 54 defines an inlet of the extruder 5. The extruder 5 comprises a channel 51. The channel 51 extends along an extruder axis C. The inlet device 54 is connected to the channel 51 to feed in the construction material. The extruder 5 comprises an extrusion screw 53. The extrusion screw 53 extends along the extruder axis C and is disposed inside the channel 51. The extruder 5 comprises an auger 52 coupled to the extrusion screw 53. The auger 52 surrounds the extrusion screw 53 and is disposed inside the channel 51. The extruder 5 includes an extrusion nozzle 55. The extrusion nozzle 55 is disposed at one end of the channel 51. The extrusion nozzle 55 defines an outlet of the extruder 5. The apparatus 1 comprises an actuator of the extruder 5. The actuator of the extruder 5 includes a fourth motor 57. The fourth motor 57 is connected to the extrusion screw 53 to drive it in rotation about the extruder axis C. The rotation of the screw 53 and of the auger 52 surrounding it causes the construction material to be moved along the channel 51 from the inlet device 54 to the extrusion nozzle 55. The rotation of the auger 52 in the channel 51 generates frictional forces which fluidize the construction material as it advances along the channel 51. The extruder is slidable along the boom 4 to move between a plurality of intermediate positions between a position proximal to the lifting tower 2 and a position distal from the lifting tower 2. The boom 4 is rotatable around the lifting tower 2; thus, at the distal position, the extruder 5 defines a circular trajectory T around the lifting tower 2. The extruder 5 moves on the inside of the circumferential edge defined by the circular trajectory T.

In an embodiment, the apparatus 1 comprises a control unit. The control unit is programmed to control the first motor 33, the second motor 34, the third motor 41 and the fourth motor 57.

In an embodiment, the control unit is configured to keep the fourth motor 57 on for a predetermined length of time, referred to as cleaning time, when the construction material inlet device 54 is stopped (that is to say, when 3D printing is brought to a stop). During the cleaning time, the auger 52 of the extruder 5 continues rotating so that all the construction material remaining inside the channel 51 is cleared out and does not become solid inside the channel 51.

The apparatus 1 comprises a base anchoring system 6. The base anchoring system 6 is configured to anchor the base 22 of the lifting tower 2 to the ground. The base anchoring system 6 includes a lower plate 61 and an upper plate 62. The lower plate 61 is configured to be anchored to the ground. The upper plate 62 is configured to be anchored to the base 22 of the lifting tower 2. The upper plate 62 is anchored to the lower plate 61.

The base anchoring system includes a plurality of levelling connectors 63 configured to anchor the lower plate 61 to the upper plate 62. In an embodiment, the levelling connectors 63 are in the form of screws. In an embodiment, there are three levelling connectors 63. The levelling connectors 63 are adjustable to vary the distance between the lower plate 61 and the upper plate 62.

The base anchoring system 6 also comprises a plurality of lower connectors 64 (also in the form of screws), configured to anchor the lower plate 61 to the ground. The base anchoring system 6 also comprises a plurality of upper connectors 65 configured to anchor the upper plate 62 to the base 22 of the lifting tower 2.

In an embodiment, the upper plate 62 is triangular in shape. In an embodiment, the lower plate 61 is triangular in shape.

The apparatus 1 forms part of a system 10 for the 3D printing of buildings 9. The system 10 thus includes the apparatus 1 (or a plurality of apparatuses like the apparatus 1). The system 10 includes a supporting structure. The summit 21 of the apparatus 1 is fastened (removably) to the supporting structure.

The supporting structure (or the system 10) comprises a fastening module 7 (or a plurality of fastening modules 7).

Each fastening module 7 comprises an underside face 71. The fastening module 7 comprises a top face 72. The top face 72 is parallel to the underside face 71. The fastening module 7 comprises three side faces 73, oriented perpendicularly to the underside face 71 and to the top face 72. The side faces 73 are inclined to each other by 120° to form a triangular prism (with interior angles of 60° made by the side faces).

A fastening module 7 is removably fastened to the summit 21 of the lifting tower 2. The summit 21 of the lifting tower 2 is removably fastened (by screws or quick disconnect couplings) to the underside face 71 of the fastening module 7. The base 22 of the lifting tower 2 is removably fastenable to the top face 72 of the fastening module 7.

The system 10 comprises a plurality of fastening modules 7 (of the type described above). The system 10 comprises a plurality of base anchoring systems 6 (of the type described above).

The system 10 (or the supporting structure) comprises a plurality of columns 81. The columns 81 of the plurality of columns 81 extend along the vertical direction V. Each column 81 of the plurality of columns 81 has a summit that is removably fastenable (by screws or quick disconnect couplings) to a fastening module 7 of the plurality of fastening modules (specifically to the underside face 71). Each column 81 of the plurality of columns 81 has a base that is removably fastenable (by screws or quick disconnect couplings) to a base anchoring system 6 of the plurality of base anchoring systems 6 (specifically to the upper plate 62). The base of each column 81 of the plurality of columns 81 is removably fastenable to the top face 72 of a fastening module 7 (alternatively to the base anchoring system 6).

The system 10 (or the supporting structure) comprises a plurality of crosspieces 82. The crosspieces 82 of the plurality of crosspieces 82 extend perpendicularly to the vertical direction V. The crosspieces 82 of the plurality of crosspieces 82 each have a first end and a second end. The first and second ends of each crosspiece 82 are each removably fastenable (by screws or quick disconnect couplings) to each side face 73 of each fastening module 7.

In an embodiment, the summit of the apparatus 1 is triangular in shape (preferably the shape of an equilateral triangle). In an embodiment, the base of the apparatus 1 is triangular in shape (preferably the shape of an equilateral triangle). In an embodiment, the summit of each column 81 is triangular in shape (preferably the shape of an equilateral triangle). In an embodiment, the base of each column 81 is triangular in shape (preferably the shape of an equilateral triangle). In an embodiment, the first and second ends of each crosspiece 82 are each triangular in shape (preferably the shape of an equilateral triangle). In an embodiment, the underside face 71 of each fastening module 7 is triangular in shape (preferably the shape of an equilateral triangle). In an embodiment, the top face 72 of each fastening module 7 is triangular in shape (preferably the shape of an equilateral triangle). In an embodiment, the side faces 73 of each fastening module 7 are triangular in shape.

Preferably, each fastening module 73 includes three side faces 73, oriented in parallel with the vertical direction V, and connected to each other to make respective interior angles of 60° (that is to say, each side face 73 makes an angle of 60° with an adjacent side face 73). Thus, a first crosspiece 82 and a second crosspiece 82 can be connected to respective side faces 73 of the same fastening module 7 so as to make an angle of 120° between the first and the second crosspiece 82. In at least one operating configuration, therefore, the system 10 includes six crosspieces 82 connected to each other (by six fastening modules 7) to define a hexagon.

In an embodiment, the columns 81 and the crosspieces 82 are made of aluminium. In an embodiment, each column 81 (and each crosspiece 82) comprises three main bars extending along the vertical direction V (or perpendicularly to the vertical direction V in the case of the crosspieces 82) and a plurality of diagonal bars that interconnect the main bars to each other. This structure has a good weight/load resistance ratio.

The system 10 can thus be assembled and disassembled very easily. The configuration of the system 10 can be changed during the course of construction of a building 9 (for example, by replacing a column 81 with an apparatus 1 or vice versa, or by adding or removing columns 81 and crosspieces 82).

For example, the system 10 may have a first configuration, in which it includes an apparatus 1 for the 3D printing of buildings, connected to the underside face 71 of a fastening module 7 which is connected, by the side faces 73, to three respective first ends of three crosspieces 82; fastened to the second ends of the three crosspieces 82 are three further fastening modules 7 whose underside faces 71 are in turn fastened to three respective columns 81. In the first configuration, the system 10 can construct a first part of the building 9. Once the first part of the building 9 has been completed, the system 10 can be changed into a second configuration, in which it is suitable for constructing a second part of the building 9. In the second configuration, the system 10 includes five crosspieces 82, disposed to form a pentagon, and a sixth crosspiece connected to one corner of the pentagon; compared to the first configuration, the apparatus 1 is moved to the place where one of the columns 81 was originally. At each corner of the pentagon there is a fastening module 7 whose underside face 71 has a respective column 81 connected to it (with the base of the column resting on a respective base anchoring system 6).

If the ground is not perfectly level, the levelling connectors 63 of the base anchoring systems 6 connected to the columns 81 can be adjusted in such a way that the upper plates 62 are oriented horizontally and positioned at the same level, so that the crosspieces 82 are all oriented perpendicularly to the vertical direction V.

The system 10 preferably comprises a protection system (or device) for protecting the system (and workers) from the sun, wind and/or rain. The protection system includes a plurality of canvases (or canopies) 110; the canvases 110 are connected (removably) to the supporting structure. More specifically, the canvases 110 may be connected by suitable connectors (hooks) to the fastening modules 7 (and/or to the columns 81, and/or to the crosspieces 82 and/or to the base anchoring systems 6).

In the embodiment illustrated, the canvases 110 are triangular in shape (more specifically, the shape of an equilateral triangle); each side of the triangle is equal in length to each crosspiece 82. Each canvas 110 includes a first, a second and a third corner. For each canvas 110, the first corner is connected to a module 7, the second corner is connected to a further module 7 (in such a way that a crosspiece 82 interconnected between the module and the further module is adjacent and parallel to the side of the canvas 110 between the first and the second corner) and the third corner is connected to other canvases 110 (in particular to the third corners of at least two other canvases 110). The third corner of each canvas 110 is connected to the other canvases 110 by a connecting ring 111. Preferably, the canvases 110 are oriented horizontally, perpendicularly to the weight force. Thus, the canvases 110 are kept in a stretched condition. More specifically, in at least one embodiment, in which the crosspieces 82 are interconnected to form a hexagon, there are six canvases 110 connected to the supporting structure, in the following manner: each canvas 110 has a first corner connected to a module 7, a second corner connected to a further module 7 and one side, extending between the first and the second corner, adjacent and parallel to the crosspiece 82b that is interconnected between the module 7 and the further module 7; the third corner, on the other hand, is tied to the centre of the hexagon by the third corners of the other five canvases 110; that way, the canvases are stretched and held tautly by the modules 7 of the supporting structure.

As regards materials, the canvases may be made, for example, of natural or nylon fabric .

## Claims

1. A system (10) for constructing buildings (9) comprising:
- an apparatus (1) for the 3D printing of buildings (9), comprising:
- an elongate lifting tower (2) extending along a lifting axis (A) oriented in a vertical direction (V);
- an operating unit (3) coupled to the lifting tower (2);
- a boom (4) connected to the operating unit (3) and rotating relative to the lifting tower (2);
- an extruder (5) mounted on the boom (4) and configured to deliver a fluid construction material,
wherein the operating unit (3) is slidable along the lifting tower (2) to lift and lower the boom (4), **characterized in that** the system further comprises
- a supporting structure;
wherein the lifting tower (2) of the apparatus (1) has a summit (21) which is fastened to the supporting structure,
wherein the lifting tower (2) comprises a base (22) and the supporting structure includes a respective base and a respective base anchoring system, configured to anchor the base of the supporting structure to the ground,
wherein the base of the lifting tower (2) rests on the ground at a first supporting point and the base of the supporting structure rests on a second supporting point, different from the first supporting point.

2. The system according to claim 1, wherein the operating unit (3) has an annular shape defining a central opening and surrounds the lifting tower (2) positioned inside the central opening of the operating unit (3).

3. The system according to claim 2 wherein the apparatus (1) comprises:
- a lifting actuator, configured to move the operating unit (3) along the vertical direction (V), wherein the lifting actuator is mounted on the operating unit (3);
- an elongate lifting screw (23) extending parallel to the lifting axis (A);
- a lead nut (35) fixed to the operating unit (3), wherein the lifting actuator includes a first motor (33) configured to cause the lead nut (35) relative to the lifting screw (23).

4. The system according to any of the preceding claims, wherein the operating unit (3) comprises:
- a first part (31) which is coupled to the lifting tower (2) to slide along the lifting tower (2),
- a second part (32) which is rotatably coupled to the first part (31) to rotate about the lifting axis (A), wherein the boom (4) is connected to the second part (32),
wherein the apparatus (1) comprises a rotation actuator mounted on the operating unit (3) and including a second motor (34) configured to make the second part (32) of the operating unit (3) rotate about the lifting axis (A).

5. The system according to claim 4, wherein the operating unit (3) comprises:
- a plurality of thrust bearings (36) defining a rotary coupling between the first part (31) of the operating unit (3) and the second part (32) of the operating unit (3);
- a plurality of centring bearings (37) defining a slidable coupling between the operating unit (3) and the lifting tower (2).

6. The system according to any of the preceding claims, wherein the apparatus comprises a base anchoring system (6) configured to anchor the base (22) of the lifting tower (2) to the ground and including a lower plate (61), an upper plate (62) and a plurality of levelling connectors (63), wherein the base (22) of the lifting tower (2) is connected to the upper plate (62), the lower plate (61) is configured to rest on the ground and the plurality of levelling connectors (63) connect the lower plate (61) to the upper plate (62) and are adjustable to vary the distance between the lower plate (61) and the upper plate (62) and/or the relative orientation between the lower plate (61) to the upper plate (62).

7. The system according any one of the preceding claims, wherein the apparatus (1) comprises:
- at least one laser pointer located on the operating unit (3) or on the boom (4) or on the extruder (5), at a predetermined position,
- a plurality of targets located at respective reference positions, wherein the at least one laser pointer is configured to project a laser beam on one or more targets of the plurality of targets;
- a control unit programmed to receive from the at least one laser pointer at least one position signal representing a position of the operating unit (3) or of the boom (4) or of the extruder (5), and to control a movement of the operating unit (3) or of the boom (4) or of the extruder (5) as a function of a preset printing path and of the position signal.

8. The system according any one of the preceding claims, wherein the extruder (5) includes an elongate channel (51) extending between an inlet and an outlet, and an auger (52) rotating inside the channel (51), and is configured to receive, at the inlet, a flow of construction material in raw form and to deliver, at the outlet, a fluid construction material.

9. The system according any one of the preceding claims, wherein the apparatus comprises an additional extruder mounted on the boom (4) and configured to provide a second fluid construction material.

10. The system according any one of the preceding claims, wherein the apparatus comprises a user interface, configured to receive vocal commands for a user to control one or more operating parameters of the apparatus (1).

11. The system (10) according to any of the preceding claims, comprising a plurality of fastening modules (7), wherein each fastening module (7) of the plurality of fastening modules (7) includes: an underside face (71), a top face (72) parallel to the underside face (71) and a plurality of side faces (73),
wherein the supporting structure comprises a plurality of columns (81) and a plurality of crosspieces (82),
and wherein the underside face (71) of each fastening module (7) of the plurality of fastening modules (7) is removably fastenable to the summit (21) of the lifting tower (2) of the apparatus (1) for the 3D printing of buildings or to a column (81) of the plurality of columns (81), and wherein each side face (73) of the plurality of side faces (73) of each fastening module (7) is removably fastenable to a crosspiece (82) of the plurality of crosspieces (82).

12. The system (10) according to any of the preceding claims, comprising a protection system including one or more canvases (110) connectable to the supporting structure and configured to protect the 3D printing apparatus and/or the building construction workers against the weather.

13. A method for the 3D printing of buildings (9), comprising the following steps:
- preparing an elongate lifting tower (2) extending along a lifting axis (A) oriented in a vertical direction (V), an operating unit (3) connected to the lifting tower (2), a boom (4) connected to the operating unit (3) and an extruder (5) mounted on the boom (4);
- rotating the boom (4) around the lifting tower (2);
- delivering a fluid construction material through the extruder (5); **characterized in that** it further comprises a step of moving the operating unit (3) relative to the lifting tower (2), wherein the step of moving the operating unit (3) comprises sliding the operating unit (3) along the lifting tower (2) to lift and lower the boom (4),
comprising a step of fastening a summit (21) of the lifting tower (2) to a supporting structure prior to the step of moving the operating unit (3),
wherein the lifting tower (2) comprises a base (22) and the supporting structure includes a respective base and a respective base anchoring system, configured to anchor the base of the supporting structure to the ground,
wherein the base of the lifting tower (2) rests on the ground at a first supporting point and the base of the supporting structure rests on a second supporting point, different from the first supporting point.

14. The method according to claim 13, wherein the supporting structure comprises a plurality of columns (81) and a plurality of crosspieces (82), wherein the step of fastening includes replacing a column (81) of the plurality of columns (81) with the lifting tower (2).

## Patentansprüche

1. System (10) zum Bau von Gebäuden (9), umfassend:
- eine Vorrichtung (1) für den 3-D-Druck von Gebäuden (9), umfassend:
- einen langgestreckten Hebeturm (2), der sich entlang einer Hubachse (A) erstreckt, die in eine vertikale Richtung (V) ausgerichtet ist;
- eine Betriebseinheit (3), die mit dem Hebeturm (2) gekuppelt ist;
- einen Ausleger (4), der mit der Betriebseinheit (3) verbunden ist und sich relativ zum Hebeturm (2) dreht;
- eine Spritzmaschine (5), die auf dem Ausleger (4) montiert und ausgelegt ist, um einen flüssigen Baustoff zuzuführen,
wobei die Betriebseinheit (3) entlang des Hebeturms (2) verschiebbar ist, um den Ausleger (4) zu heben und zu senken, **dadurch gekennzeichnet, dass** das System zudem Folgendes umfasst:
- eine Halterungsstruktur (401),
wobei der Hebeturm (2) der Vorrichtung (1) eine Spitze (21) aufweist, die an der Halterungsstruktur befestigt ist,
wobei der Hebeturm (2) eine Basis (22) umfasst und die Halterungsstruktur eine jeweilige Basis und ein jeweiliges Basisverankerungssystem aufweist, das ausgelegt ist, um die Basis der Halterungsstruktur am Boden zu verankern,
wobei die Basis des Hebeturms (2) auf dem Boden an einem ersten Auflagepunkt ruht und die Basis der Halterungsstruktur auf einem zweiten Auflagepunkt ruht, der sich vom ersten Auflagepunkt unterscheidet.

2. System nach Anspruch 1, wobei die Betriebseinheit (3) eine Ringform aufweist, die eine mittige Öffnung definiert und den Hebeturm (2) umgibt, der in der mittigen Öffnung der Betriebseinheit (3) positioniert ist.

3. System nach Anspruch 2, wobei die Vorrichtung (1) Folgendes umfasst:
- einen Hubantrieb, der ausgelegt ist, um die Betriebseinheit (3) entlang der vertikalen Richtung (V) zu bewegen, wobei der Hubantrieb auf der Betriebseinheit (3) montiert ist;
- eine langgestreckte Hubspindel (23), die sich parallel zur Hubachse (A) erstreckt;
- eine Trapezspindel (35), die an der Betriebseinheit (3) fixiert ist, wobei der Hubantrieb einen ersten Motor (33) einschließt, der ausgelegt ist, um dafür zu sorgen, dass sich die Trapezspindel (35) relativ zur Hubspindel (23) dreht.

4. System nach einem der vorhergehenden Ansprüche, wobei die Betriebseinheit (3) Folgendes umfasst:
- einen ersten Teil (31), der mit dem Hebeturm (2) gekuppelt ist, um sich entlang des Hebeturms (2) zu verschieben;
- einen zweiten Teil (32), der drehbar mit dem ersten Teil (31) gekuppelt ist, um sich um die Hubachse (A) zu drehen, wobei der Ausleger (4) mit dem zweiten Teil (32) verbunden ist,
wobei die Vorrichtung (1) einen Rotationsantrieb umfasst, der auf der Betriebseinheit (3) montiert ist und einen zweiten Motor (34) einschließt, der ausgelegt ist, um dafür zu sorgen, dass sich der zweite Teil (32) der Betriebseinheit (3) um die Hubachse (A) dreht.

5. System nach Anspruch 4, wobei die Betriebseinheit (3) Folgendes umfasst:
- eine Vielzahl von Drucklagern (36), die eine rotatorische Kupplung zwischen dem ersten Teil (31) der Betriebseinheit (3) und dem zweiten Teil (32) der Betriebseinheit (3) definieren;
- eine Vielzahl von Zentrierlagern (37), die eine verschiebbare Kupplung zwischen der Betriebseinheit (3) und dem Hebeturm (2) definieren.

6. System nach einem der vorhergehenden Ansprüche, wobei die Vorrichtung ein Basisverankerungssystem (6) umfasst, das ausgelegt ist, um die Basis (22) des Hebeturms (2) am Boden zu verankern, und einschließend eine untere Platte (61), eine obere Platte (62) und eine Vielzahl von Nivellierverbindungsstücken (63), wobei die Basis (22) des Hebeturms (2) mit der oberen Platte (62) verbunden ist, die untere Platte (61) ausgelegt ist, um auf dem Boden zu ruhen und die Vielzahl von Nivellierverbindungsstücken (63) die untere Platte (61) mit der oberen Platte (62) verbindet und verstellbar ist, um den Abstand zwischen der unteren Platte (61) und der oberen Platte (62) und/oder die entsprechende Ausrichtung zwischen der unteren Platte (61) und der oberen Platte (62) zu variieren.

7. Vorrichtung (1) nach einem der vorhergehenden Ansprüche, wobei die Vorrichtung (1) Folgendes umfasst:
- mindestens einen Laserpointer, der sich auf der Betriebseinheit (3) oder auf dem Ausleger (4) oder auf der Spritzmaschine (5) an einer vorgegebenen Position befindet;
- eine Vielzahl von Zielobjekten, die sich an jeweiligen Referenzpositionen befinden, wobei der mindestens eine Laserpointer ausgelegt ist, um einen Laserstrahl auf ein oder mehrere Zielobjekte der Vielzahl von Zielobjekten zu projizieren;
- eine Steuereinheit, die programmiert ist, um vom mindestens einen Laserpointer mindestens ein Positionssignal zu empfangen, das eine Position der Betriebseinheit (3) oder des Auslegers (4) oder der Spritzmaschine (5) darstellt, und um eine Bewegung der Betriebseinheit (3) oder des Auslegers (4) oder der Spritzmaschine (5) als eine Funktion des voreingestellten Druckwegs und des Positionssignals zu steuern.

8. System nach einem der vorhergehenden Ansprüche, wobei die Spritzmaschine (5) einen langgestreckten Kanal (51) einschließt, der sich zwischen einem Einlass und einem Auslass erstreckt, und eine Schnecke (52), die sich im Kanal (51) dreht und ausgelegt ist, am Einlass einen Baustoffstrom in Rohform zu empfangen und am Auslass einen flüssigen Baustoff zuzuführen.

9. System nach einem der vorhergehenden Ansprüche, wobei die Vorrichtung eine zusätzliche Spritzmaschine umfasst, die auf dem Ausleger (4) montiert und ausgelegt ist, um einen zweiten flüssigen Baustoff bereitzustellen.

10. System nach einem der vorhergehenden Ansprüche, wobei die Vorrichtung eine Benutzerschnittstelle umfasst, die ausgelegt ist, um Sprachbefehle zu empfangen, damit ein Nutzer einen oder mehrere Betriebsparameter der Vorrichtung (1) regeln kann.

11. System (10) nach einem der vorhergehenden Ansprüche, umfassend eine Vielzahl von Befestigungsmodulen (7), wobei ein jedes Befestigungsmodul (7) der Vielzahl von Befestigungsmodulen (7) Folgendes einschließt: eine unterseitige Seitenfläche (71), eine oberseitige Seitenfläche (72), die parallel zur unterseitigen Seitenfläche (71) angeordnet ist, und eine Vielzahl von seitlichen Seitenflächen (73),
wobei die Halterungsstruktur eine Vielzahl von Säulen (81) und eine Vielzahl von Querstücken (82) umfasst,
und wobei die unterseitige Seitenfläche (71) eines jeden Befestigungsmoduls (7) der Vielzahl von Befestigungsmodulen (7) entfernbar an der Spitze (21) des Hebeturms (2) der Vorrichtung (1) für den 3-D-Druck von Gebäuden oder an einer Säule (81) der Vielzahl von Säulen (81) befestigt werden kann, und wobei eine jede seitliche Seitenfläche (73) der Vielzahl von seitlichen Seitenflächen (73) eines jeden Befestigungsmoduls (7) entfernbar an einem Querstück (82) der Vielzahl von Querstücken (82) befestigt werden kann.

12. System (10) nach einem der vorhergehenden Ansprüche, umfassend ein Schutzsystem, das eine oder mehrere Planen (110) einschließt, die mit der Halterungsstruktur verbunden werden können und ausgelegt sind, um die 3-D-Druckvorrichtung und/oder die Bauarbeiter vor dem Wetter zu schützen.

13. Verfahren für den 3-D-Druck von Gebäuden (9), umfassend die folgenden Schritte:
- Vorbereiten eines langgestreckten Hebeturms (2), der sich entlang einer Hubachse (A) erstreckt, die in eine vertikale Richtung (V) ausgerichtet ist, einer Betriebseinheit (3), die mit dem Hebeturm (2) verbunden ist, eines Auslegers (4), der mit der Betriebseinheit (3) verbunden ist, und einer Spritzmaschine (5), die auf dem Ausleger (4) montiert ist;
- Drehen des Auslegers (4) rund um den Hebeturm (2);
- Zuführen eines flüssigen Baustoffs durch die Spritzmaschine (5),
**dadurch gekennzeichnet, dass** es zudem einen Schritt zum Bewegen der Betriebseinheit (3) relativ zum Hebeturm (2) umfasst, wobei der Schritt zum Bewegen der Betriebseinheit (3) das Verschieben der Betriebseinheit (3) entlang des Hebeturms (2) umfasst, um den Ausleger (4) zu heben und zu senken,
umfassend einen Schritt zum Befestigen einer Spitze (21) des Hebeturms (2) an einer Halterungsstruktur vor dem Schritt zum Bewegen der Betriebseinheit (3),
wobei der Hebeturm (2) eine Basis (22) umfasst und die Halterungsstruktur eine jeweilige Basis und ein jeweiliges Basisverankerungssystem aufweist, das ausgelegt ist, um die Basis der Halterungsstruktur am Boden zu verankern,
wobei die Basis des Hebeturms (2) auf dem Boden an einem ersten Auflagepunkt ruht und die Basis der Halterungsstruktur auf einem zweiten Auflagepunkt ruht, der sich vom ersten Auflagepunkt unterscheidet.

14. Verfahren nach Anspruch 13, wobei die Halterungsstruktur eine Vielzahl von Säulen (81) und eine Vielzahl von Querstücken (82) umfasst, wobei der Schritt zum Befestigen das Ersetzen einer Säule (81) der Vielzahl von Säulen (81) durch den Hebeturm (2) einschließt.

## Revendications

1. Système (10) pour la construction de bâtiments (9), comprenant :
- un appareil (1) pour l'impression 3D de bâtiments (9), comprenant :
- une tour de levage allongée (2) se prolongeant le long d'un axe de levage (A) orienté dans une direction verticale (V) ;
- une unité d'actionnement (3) couplée à la tour de levage (2) ;
- une flèche (4) reliée à l'unité d'actionnement (3) et tournant par rapport à la tour de levage (2) ;
- une extrudeuse (5) montée sur la flèche (4) et configurée pour délivrer un matériau de construction fluide,
dans lequel l'unité d'actionnement (3) peut coulisser le long de la tour de levage (2) pour lever et abaisser la flèche (4), **caractérisé en ce que** le système comprend de plus :
- une structure de support ;
dans lequel la tour de levage (2) de l'appareil (1) comporte un sommet (21) qui est fixé à la structure de support,
dans lequel la tour de levage (2) comprend une base (22) et la structure de support inclut une base respective et un système d'ancrage de base respectif configuré pour ancrer la base de la structure de support au sol,
dans lequel la base de la tour de levage (2) repose sur le sol en correspondance d'un premier point de support et la base de la structure de support repose sur un deuxième point de support, différent du premier point de support.

2. Système selon la revendication 1, dans lequel l'unité d'actionnement (3) a une forme annulaire définissant une ouverture centrale et entoure la tour de levage (2) positionnée à l'intérieur de l'ouverture centrale de l'unité d'actionnement (3).

3. Système selon la revendication 2, dans lequel l'appareil (1) comprend :
- un actionneur de levage configuré pour déplacer l'unité d'actionnement (3) le long de la direction verticale (V), dans lequel l'actionneur de levage est monté sur l'unité d'actionnement (3) ;
- une vis de levage allongée (23) se prolongeant parallèlement à l'axe de levage (A) ;
- une vis mère (35) fixée à l'unité d'actionnement (3), dans lequel l'actionneur de levage inclut un premier moteur (33) configuré pour faire tourner la vis mère (35) par rapport à la vis de levage (23).

4. Système selon l'une quelconque des revendications précédentes, dans lequel l'unité d'actionnement (3) comprend :
- une première partie (31) qui est couplée à la tour de levage (2) pour coulisser le long de la tour de levage (2),
- une deuxième partie (32) qui est couplée de manière rotative à la première partie (31) pour tourner autour de l'axe de levage (A), dans lequel la flèche (4) est reliée à la deuxième partie (32),
dans lequel l'appareil (1) comprend un actionneur de rotation monté sur l'unité d'actionnement (3) et incluant un deuxième moteur (34) configuré pour faire tourner la deuxième partie (32) de l'unité d'actionnement (3) autour de l'axe de levage (A).

5. Système selon la revendication 4, dans lequel l'unité d'actionnement (3) comprend :
- une pluralité de paliers de butée (36) définissant un accouplement rotatif entre la première partie (31) de l'unité d'actionnement (3) et la deuxième partie (32) de l'unité d'actionnement (3) ;
- une pluralité de paliers de centrage (37) définissant un accouplement coulissant entre l'unité d'actionnement (3) et la tour de levage (2).

6. Système selon l'une quelconque des revendications précédentes, dans lequel l'appareil comprend un système d'ancrage de base (6) configuré pour ancrer la base (22) de la tour de levage (2) au sol et incluant une plaque inférieure (61), une plaque supérieure (62) et une pluralité de connecteurs de nivellement (63), dans lequel la base (22) de la tour de levage (2) est reliée à la plaque supérieure (62), la plaque inférieure (61) est configurée pour reposer sur le sol et la pluralité de connecteurs de nivellement (63) relient la plaque inférieure (61) à la plaque supérieure (62) et sont réglables pour faire varier la distance entre la plaque inférieure (61) et la plaque supérieure (62) et/ou l'orientation relative entre la plaque inférieure (61) et la plaque supérieure (62).

7. Système selon l'une quelconque des revendications précédentes, dans lequel l'appareil (1) comprend :
- au moins un pointeur laser situé sur l'unité d'actionnement (3) ou sur la flèche (4) ou sur l'extrudeuse (5), à une position prédéterminée,
- une pluralité de cibles situées à des positions de référence respectives, dans lequel l'au moins un pointeur laser est configuré pour projeter un faisceau laser sur une ou plusieurs cibles de la pluralité de cibles ;
- une unité de commande programmée pour recevoir de l'au moins un pointeur laser au moins un signal de position représentant une position de l'unité d'actionnement (3) ou de la flèche (4) ou de l'extrudeuse (5), et pour commander un mouvement de l'unité d'actionnement (3) ou de la flèche (4) ou de l'extrudeuse (5) en fonction d'un trajet d'impression prédéfini et du signal de position.

8. Système selon l'une quelconque des revendications précédentes, dans lequel l'extrudeuse (5) inclut un canal allongé (51) se prolongeant entre une entrée et une sortie, et une vis sans fin (52) tournant à l'intérieur du canal (51), et est configurée pour recevoir, à l'entrée, un flux de matériau de construction sous forme brute et pour délivrer, à la sortie, un matériau de construction fluide.

9. Système selon l'une quelconque des revendications précédentes, dans lequel le dispositif comprend une extrudeuse supplémentaire montée sur la flèche (4) et configurée pour fournir un deuxième matériau de construction fluide.

10. Système selon l'une quelconque des revendications précédentes, dans lequel l'appareil comprend une interface utilisateur configurée pour recevoir des commandes vocales pour un utilisateur afin de contrôler un ou plusieurs paramètres de fonctionnement de l'appareil (1).

11. Système (10) selon l'une quelconque des revendications précédentes, comprenant une pluralité de modules de fixation (7), dans lequel chaque module de fixation (7) de la pluralité de modules de fixation (7) inclut : une face inférieure (71), une face supérieure (72) parallèle à la face inférieure (71) et une pluralité de faces latérales (73),
dans lequel la structure de support comprend une pluralité de colonnes (81) et une pluralité de traverses (82),
et dans lequel la face inférieure (71) de chaque module de fixation (7) de la pluralité de modules de fixation (7) peut être fixée de manière amovible au sommet (21) de la tour de levage (2) de l'appareil (1) pour l'impression 3D de bâtiments ou à une colonne (81) de la pluralité de colonnes (81), et dans lequel chaque face latérale (73) de la pluralité de faces latérales (73) de chaque module de fixation (7) peut être fixée de manière amovible à une traverse (82) de la pluralité de traverses (82) .

12. Système (10) selon l'une quelconque des revendications précédentes, comprenant un système de protection incluant une ou plusieurs toiles (110) pouvant être reliés à la structure de support et configurées pour protéger l'appareil d'impression 3D et/ou les ouvriers du bâtiment contre les intempéries.

13. Procédé d'impression 3D de bâtiments (9), comprenant les étapes suivantes :
- préparer une tour de levage allongée (2) se prolongeant le long d'un axe de levage (A) orienté dans une direction verticale (V), une unité d'actionnement (3) reliée à la tour de levage (2), une flèche (4) reliée à l'unité d'actionnement (3) et une extrudeuse (5) montée sur la flèche (4) ;
- faire tourner la flèche (4) autour de la tour de levage (2) ;
- délivrer un matériau de construction fluide à travers l'extrudeuse (5) ;
**caractérisé en ce qu'**il comprend de plus une étape consistant à déplacer l'unité d'actionnement (3) par rapport à la tour de levage (2), dans lequel l'étape consistant à déplacer l'unité d'actionnement (3) comprend le coulissement de l'unité d'actionnement (3) le long de la tour de levage (2) pour lever et abaisser la flèche (4),
comprenant une étape de fixation d'un sommet (21) de la tour de levage (2) à une structure de support avant l'étape de déplacement de l'unité de commande (3),
dans lequel la tour de levage (2) comprend une base (22) et la structure de support inclut une base respective et un système d'ancrage de base respectif configuré pour ancrer la base de la structure de support au sol,
dans lequel la base de la tour de levage (2) repose sur le sol en correspondance d'un premier point de support et la base de la structure de support repose sur un deuxième point de support, différent du premier point de support.

14. Procédé selon la revendication 13, dans lequel la structure de support comprend une pluralité de colonnes (81) et une pluralité de traverses (82), dans lequel l'étape de fixation inclut le remplacement d'une colonne (81) de la pluralité de colonnes (81) par la tour de levage (2).
